# EUROPEAN PATENT SPECIFICATION

(11) **EP 0 502 152 B1**
(45) Date of publication and mention of the grant of the patent: **21.02.1996**
(21) Application number: 91916195.0
(22) Date of filing: 19.09.1991
(51) Int. Cl.: B64F 1/22

(54) **APPARATUS AND A VEHICLE FOR MOVING AIRCRAFT**
SCHLEPPFAHRZEUG FÜR FLUGZEUG
DISPOSITIF ET VEHICULE SERVANT A DEPLACER UN AVION

(30) Priority: 20.09.1990 US 585894
(43) Date of publication of application: 09.09.1992
(73) Proprietor: MELNICK, Irving, CH-1838 Rougemont (CH)
(72) Inventor: MELNICK, Irving, CH-1838 Rougemont (CH)
(74) Representative: Needle, Jacqueline
(86) International application number: PCT/EP91/01789
(87) International publication number: WO 92/05073

(56) References cited:
- DE-C- 3 732 664
- US-A- 2 252 534
- US-A- 2 362 981
- US-A- 2 392 830

## Description

The present invention relates to apparatus for moving aircraft, and to a vehicle incorporating such apparatus for moving aircraft.

It is becoming increasingly popular to tow aircraft when on the ground at airports as a fuel economy measure. Because of this a number of towing devices and other plane transfer systems have been proposed or are in operation.

Devices are known which comprise a powered tractor which is arranged to capture and lift the nose gear of an aircraft prior to moving. However, such known devices have the problem that they are expensive to manufacture and difficult to handle. There is also the risk that the devices will damage the nose gear of the aircraft. With such devices the nose wheel is generally lifted onto a platform, and there is also the risk that wear will thereby be caused to the nose wheel tyre.

US-A-2252534 describes apparatus for moving aircraft comprising a wheeled frame, and aircraft wheel engaging means carried by said frame, wherein said aircraft wheel engaging means comprises at least two contour members each having a concave wheel engaging surface, each said contour member being pivotable with respect to the frame, and further comprising means for causing relative movement of said contour members towards one another to cooperate to engage an aircraft wheel and for lifting said cooperating contour members relative to said frame.

The apparatus described in this earlier specification is not designed to capture and lift the nose gear of an aircraft prior to moving the aircraft thereby and there is risk that the nose wheel tyre will be damaged thereby.

It is an object of the present invention to provide apparatus which is suitable for moving aircraft by the nose gear and which reduces the disadvantages of the prior art.

According to the present invention apparatus for moving aircraft of the type defined in which both moving means and lifting means are provided, or in which moving and lifting means is provided, is characterised in that together the wheel engaging surfaces of said contour members extend over more than half of the circumference of a circle whereby when said cooperating contour members engage on the circumferential surface of an aircraft wheel more than half of said wheel circumferential surface is engaged thereby.

Apparatus of the invention has the advantage that the wheel engaging surfaces of the contour members together extend circumferentially over more than half of the circumference of a circle. This means that a large part of the circumferential surface of the nose wheel of an aircraft can be engaged by the contour members. In this manner a lifting force applied to the nose wheel is spread over its surface area thereby avoiding damage to the wheel. This also ensures that the contour members extend above a substantially horizontal diameter of the nose wheel. This makes it substantially impossible for the nose wheel to escape from the contour members, for example, in the event of a sudden stop.

Preferably, the axial extent of the two contour members is substantially the same as that of the aircraft wheel, for example a nose wheel, to be engaged thereby. Again this ensures that each of the contour members has a wheel engaging surface of maximum size. In a preferred embodiment, the said wheel engaging surfaces of the contour members together extend circumferentially over more than three-quarters of the circumferential surface of an aircraft wheel.

In an embodiment, each said contour member is a substantially concave plate whose inner surface is said wheel engaging surface and extends over substantially at least one quarter of the circumferential surface of aircraft wheel. In a preferred embodiment, each said contour member comprises a reinforcing member carrying said substantially concave plate, each said reinforcing member being pivotably mounted on said frame.

Preferably, one or each said reinforcing member is pivotably mounted on said frame by way of extensible means for moving the corresponding reinforcing member towards and away from the other contour member. For example, where only one said reinforcing member is connected to said frame by way of extensible means, said extensible means may comprise at least one piston and cylinder unit. Of course, the piston and cylinder unit may be powered pneumatically, hydraulically, or by any other suitable means.

In a preferred embodiment in which a moving and lifting means is provided, the pivotable connections of said contour members to the frame and said moving and lifting means are arranged such that action by said moving and lifting means initially causes the contour members to move relative to one another to engage a wheel, and continued action subsequently lifts the contour members, and the wheel, relative to said frame.

This one step engaging and lifting operation performed by apparatus of the invention is particularly advantageous as it simplifies the operation considerably.

For example, the pivot point of one contour member may be arranged to be lower than the point at which said relative movement means applies force to the other contour member. This generates a rotary motion to lift the contour members.

Preferably, at least one said reinforcing member is mounted on said frame to be tiltable relative thereto in a direction substantially at right angles to the direction of pivoting movement.

In an embodiment, means are provided for varying the size of said inner, wheel engaging surface of said contour plate.

The contour plate of at least one said contour member may be comprised of a first main part having an aperture therein in which a second part is located to define, with the first part, the inner, wheel engaging surface, and further comprising means for moving the second part out of said aperture to define a reduced wheel engaging surface.

This two-part arrangement means that when the two parts together define the wheel engaging surface, the contour member may surround a large wheel. Preferably, a piston and cylinder unit is provided for moving said second part, said piston and cylinder unit being connected to said second part and to said reinforcing member. Movement of the second part out of the first part can be caused so that the second part provides a wheel engaging surface of smaller size to engage a smaller wheel.

The second piston and cylinder unit is preferably operated independently of the first such unit. With this embodiment, the second piston and cylinder unit would extend the second part out of the first part to engage the wheel, and then the first piston and cylinder unit would be used to move both parts, but with the relative disposition remaining unchanged, to subsequently lift the wheel.

Other arrangements are, of course, possible for varying the shape of the contour member to ensure that it can be made to fit a number of differently sized wheels.

In a preferred embodiment said frame comprises two substantially parallel cross-bars, a respective one of said contour members being pivotably connected to each of said cross-bars, and two substantially parallel support bars joined by said cross-bars, wherein at least one wheel is supported on each said support bar, and said contour members are supported within said cross-bars and said support bars.

It is important that the frame is sufficiently rigid that it is able to withstand the necessary forces to lift an aircraft nose wheel. Thus, whilst other shapes and arrangements of frames are of course possible, a substantially rectangular frame is preferred, for example, fabricated of metal beams.

In an embodiment, one end of one of said cross-bars is hingedly connected to one of said support bars to define a movable gate, and the other end of said one cross-bar and the other support bar carry cooperating locking means to enable the gate to be locked in a closed position.

In use, when moving an aircraft, the hinged gate is opened to provide access to the interior of the frame. In this condition, the frame is wheeled around the nose wheel of the aircraft. The gate is then closed and locked into a closed position with the aircraft wheel retained within the frame. Preferably each said contour member comprises a reinforcing member carrying a substantially concave plate, with the reinforcing member of one contour member pivotably connected directly onto said gate. This means that the contour member is also moved out of the frame on opening of the gate. The reinforcing member of the other contour member is connected to the other cross-bar by way of at least one piston and cylinder unit.

It is advantageous that one of the contour members should be pivotably connected directly on to the gate. This means that closing the gate also directly encloses the aircraft wheel within the contour members. The piston and cylinder unit for moving one of the contour members is preferably on the other cross-bar remote from the gate. This, of course, simplifies the construction as the hydraulic or pneumatic means for the piston and cylinder unit do not have to be supported on the movable gate.

The apparatus defined above may be arranged to be towed, for example by means of a tractor, or any other suitable means, or it may be incorporated in a vehicle such as a tractor.

The invention also extends to a vehicle for moving an aircraft comprising apparatus as defined above, and further comprising means for moving the vehicle along the ground.

Embodiments of the present invention will hereinafter be described, by way of example, with reference to the accompanying drawings, in which:
Figure 1 shows a perspective view of one embodiment of apparatus of the present invention,
Figure 2 is an end elevation, partly in section, of the apparatus of Figure 1 showing contour members thereof in two alternative positions,
Figure 3 is a front elevation of an alternative embodiment of a contour member for apparatus of the invention,
Figure 4 is a plan view from above of apparatus of the invention incorporating the contour member of Figure 3,
Figure 5 is an exploded perspective view of a gate of apparatus of the invention,
Figure 6 shows a rear elevation of an alternative embodiment of apparatus of the invention showing the gate thereof,
Figure 7 is an end elevation, partly in section, of a still further embodiment of apparatus of the invention arranged to enclose differently sized nose gear, and
Figure 8 shows a front elevation of the contour member of the apparatus of Figure 7.

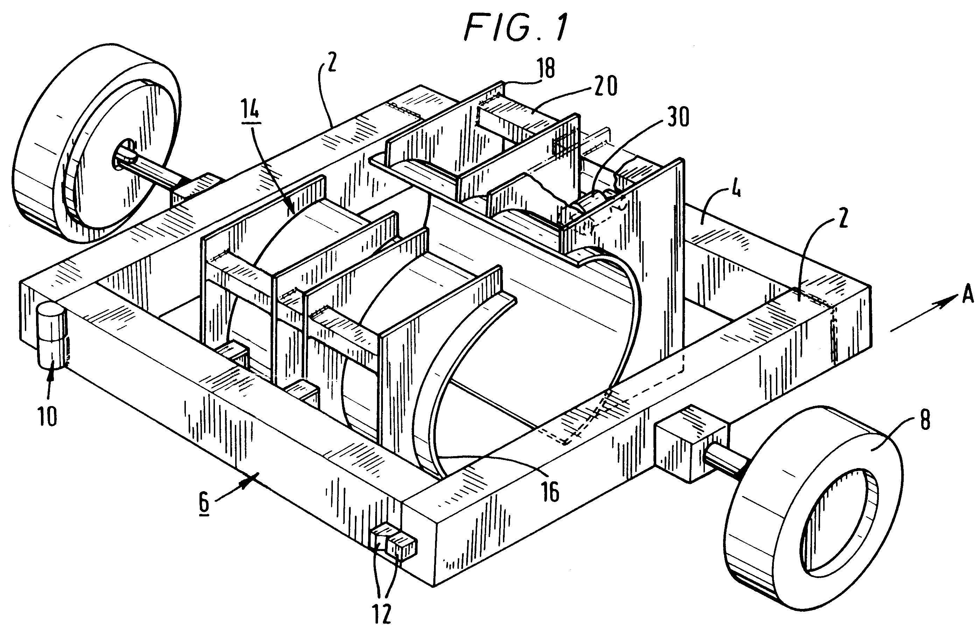

Figure 1 shows apparatus for moving an aircraft. In - this respect, the apparatus illustrated is designed to engage and lift the nose wheel assembly of the aircraft. The apparatus shown in Figure 1 may be connected, by any suitable means, to a trailer, or may be incorporated in a trailer so that when the aircraft nose wheel assembly has been engaged and lifted, the aircraft can be moved.

The apparatus illustrated in Figure 1 comprises a rigid rectangular frame having two opposed support bars or beams 2 joined together at opposite ends by respective opposed cross-bars 4 and 6. The cross-bar 4 is arranged to be connected to, or incorporated, in a trailer, so that the apparatus can be towed as indicated by the arrow A. To facilitate this, the support bars 2 each support a respective wheel 8, the two wheels 8 being arranged to be coaxial. The wheels 8 may be affixed to the support bars 2 in any known manner. It is necessary only that the overall construction is strong enough for its purpose and that the wheels 8 are rotatable.

Of course, if required, more than two wheels 8 may be provided. For example, the support bars 2 may be arranged to support two or three pairs of wheels 8. It is also possible to make the wheels, or at least one pair of them, steerable.

The apparatus illustrated in Figure 1 is arranged to be towed. However, it is possible to construct the apparatus to be self-propelled. For example, one or more of the wheels 8 might be arranged to be directly powered, or the apparatus may be incorporated into a tractor or other vehicle.

One end of the cross-bar 6 is hingedly connected to the support bar 2 by way of a hinge indicated at 10. At its other end, this cross-bar 6 carries locking means 12 arranged to cooperate with corresponding locking means 12 provided on the end of the adjacent support bar 2. It will be appreciated that release of the locking means 12 enables the cross bar 6 to hinge open in the manner of a gate. The gate 6 carries a contour member generally indicated at 14, and this contour member 14 is also swung out from within the frame during the hinging movement of the gate 6. When the gate 6 is open the nose wheel (not shown) of an aircraft can be positioned within the frame, for example by moving the frame around it.

It will be seen from Figure 1 that there are two, opposed, contour members 14, and these are arranged to cooperate to engage and lift the wheel or wheels of the aircraft nose wheel assembly. Each contour member comprises a substantially concave contour plate, which is generally part circular, and which is mounted on a reinforcing member comprising a number of substantially vertically extending, spaced plates 18 connected by one or more reinforcement bars 20. The number and thicknesses of the plates 18 and of the bars 20 are chosen to give the contour members 14 the required rigidity and strength.

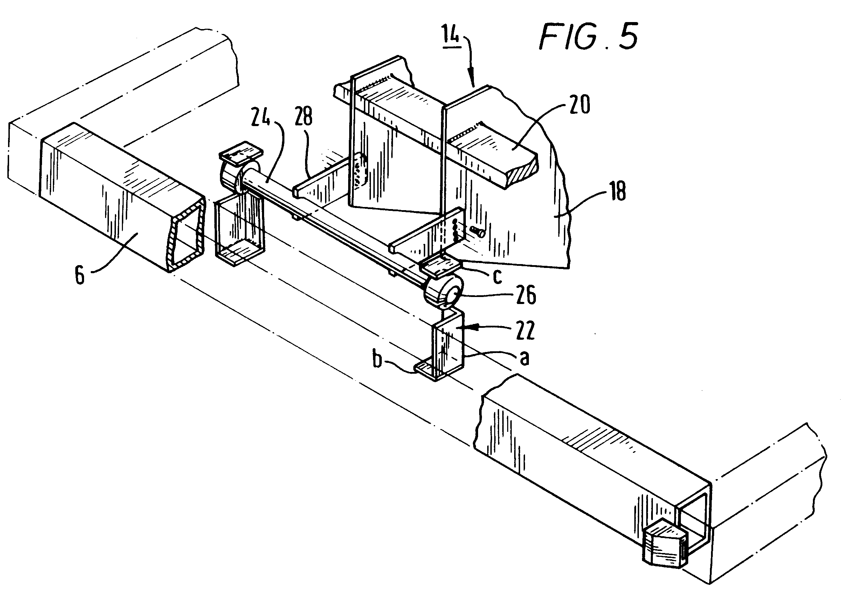

Each contour member 14 is pivotally connected to the respective cross-bar 4 and 6. In this respect, an exploded view of the pivotal connection of the contour member 14 to the gate 6 is shown in Figure 5. In this figure a cut-away of the beam forming the gate 6 is shown, and it will be seen that two channels 22 are welded to the inside of the gate 6 for supporting the contour member 14. Each channel 22 is formed of an L-shaped piece a having an edge welded to the gate 6, a planar base b welded to the L-shaped piece a and to the gate 6, and a top planar piece c which is also welded to the L-shaped member a and to the gate 6. A pivot bar 24 carried by the contour member 14 is provided with a boss 26 at each end thereof, and each boss 26 is received within a respective channel 22. It will be appreciated that each boss 26 is free to rotate within the respective channel 22, and also that some movement thereof in the substantially vertical direction is enabled. The pivot bar 24 may be connected to the contour member 14 by any known manner, but it is important that the connection should be rigid. In the embodiments shown, two connecting pieces 26 are welded to the pivot bar 24 and then fixed by way of screws to adjacent plates 18 of the reinforcing member of the contour member 14. It will be appreciated that with this arrangement, the contour member 14 is free not only to pivot relative to the gate 6, but also is adjustable in height relative thereto.

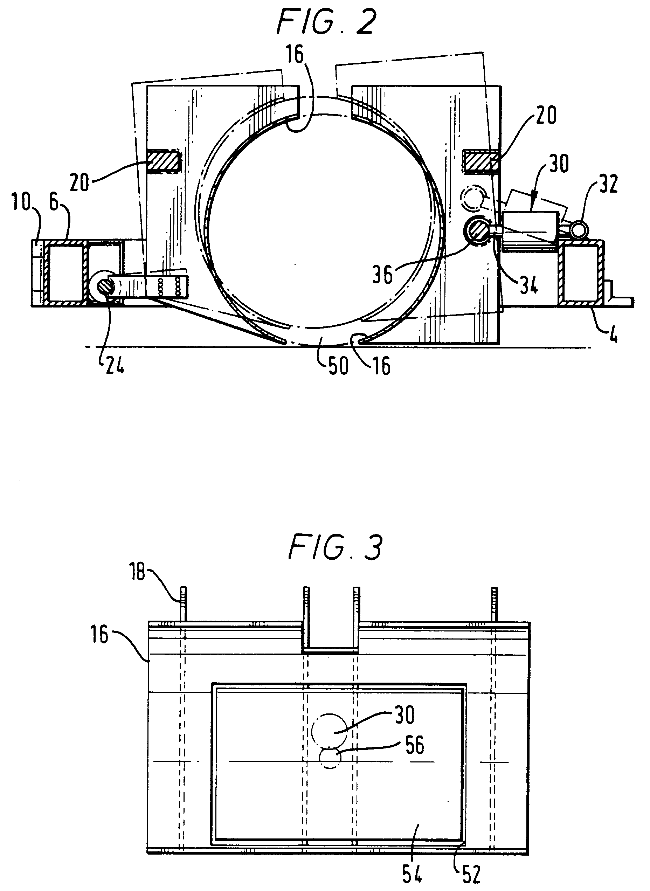

The contour member 14 connected to the cross bar 4 is also pivotally connected thereto, but this is by way of a piston and cylinder unit 30. In this respect, and as can be seen more clearly in Figure 2, the piston and cylinder unit 30 is pivotally connected by way of a pivot 32 to the top of the cross bar 4, and its piston rod 34 carries a transverse pivot pin 36 which is arranged to extend through a bore defined in two or more of the plates 18.

It will be appreciated that in operation the gate 6 is hinged open to remove the contour member 14 it carries from the interior of the frame so that access of an aircraft nose wheel assembly into that interior of the frame is allowed. The apparatus is then manoeuvred relative to the aircraft nose wheel assembly so that the internal surface of the contour plate 16 of the contour member 14 carried by the cross bar 4 comes into contact with the periphery of the nose wheel or wheels. In this respect, it is necessary only to back the apparatus relative to the aircraft until the front contour member 14 contacts the nose wheel or wheels. The gate 6 is then closed and locked whereby the internal surface of the contour plate 15 of the contour member it carries is brought into contact with the wheel circumference as indicated in Figure 2, where the reference numeral 50 schematically indicates an aircraft nose wheel. The piston and cylinder unit 30 is then powered to extend the piston rod 34. This causes the contour members 14 to enclose the wheel(s) prior to lifting. In this respect, it will be appreciated that an aircraft nose wheel assembly comprises an upwardly extending strut or support (not shown) on which one or more nose wheels are supported. In the closed position of the contour member 14, this strut or support is able to extend upwardly from between the two contour members 14, which engage the wheel or wheels 50. In this respect, larger aircraft, such as a Boeing 747 have two coaxial nose wheels and both of these wheels are enclosed and held by the closed contour members.

Continued expansion of the piston rod 34 after the wheel(s) 50 have been engaged causes pivoting of the contour members as is indicated in dash-dot lines in Figure 2. It will be seen that this pivoting movement is caused to lift the wheel(s) 50. To achieve this it is important that the pivot point on the gate 6, defined by the pivot bar 24, is substantially lower than the connection of the piston rod by way of pivot axis 36 so that an appropriate rotary movement is caused by extension of the piston rod 34.

It will be seen from consideration of Figure 2 that the inner, wheel engaging surfaces, of the two contour plates 16 each extends over almost half of the circumference of the or each aircraft nose wheel. In addition, the axial extent of the two contour members, that is, their extent parallel to the cross-bars 4 and 6, is arranged to be substantially equal, and to approximate to the axial extent of each aircraft nose wheel. This means that in lifting each wheel, most of its periphery is supported. This ensures that pressure is evenly applied to the wheel, and thereby protects the wheel against damage.

One of the advantages of the invention is that the towing vehicle does not have to be ballasted in order to handle the heavy weight loads experienced from the aircraft nose wheel assemblies of large aircraft such as a Boeing 747. This is because the contour members 14 are mounted relative to the frame 2, 4, 6 and the wheels 8 so that the centre of gravity of the frame and its wheels are substantially aligned with the centre of gravity of the aircraft wheel assembly. The weight of the aircraft is transferred down to the apparatus by way of its aircraft wheel assembly and so no additional moments of force tending to lift either the front or the back of the frame and hence of the towing vehicle are produced.

The apparatus is then towed or powered whereby the aircraft is moved as required. It has been noted that the contour member 14 carried by the gate 6 is not only free to pivot relative to the gate 6, but is also movable in height relative thereto. This allows tilting of the nose wheel assembly when the apparatus is turned. This is important on forwardly inclined nose wheels such as found on DC10 or MD11 aircraft. Of course, the base pieces b of the channels 22 limit the possible downward movement of the pivot bar 24 to ensure that each wheel remains lifted off the ground even when tilted.

If required, it would be possible to provide for some tilting of the other contour member 14 relative to the piston and cylinder unit 30, and/or of the piston and cylinder unit 30 relative to the cross-bar 4.

It will be appreciated that, with apparatus of the invention, the nose wheel assembly is surrounded, and subsequently lifted, by the rigid rectangular frame 2, 4, 6. Preferably, the support bars 2 and the cross-bars 4, 6 are made of steel so that the frame has sufficient rigidity and strength. When the frame has been positioned, only a single piston and cylinder unit 30, for example, an hydraulically powered unit, needs to be actuated to reliably engage the aircraft wheel(s) and to lift the wheel assembly. Movement of the apparatus then applies a tractive force directly to the wheel assembly whereby the aircraft is moved. The ability of the nose wheel to tilt reduces the risk of damage to aircraft such as the DC10 which has an inclined nose wheel assembly.

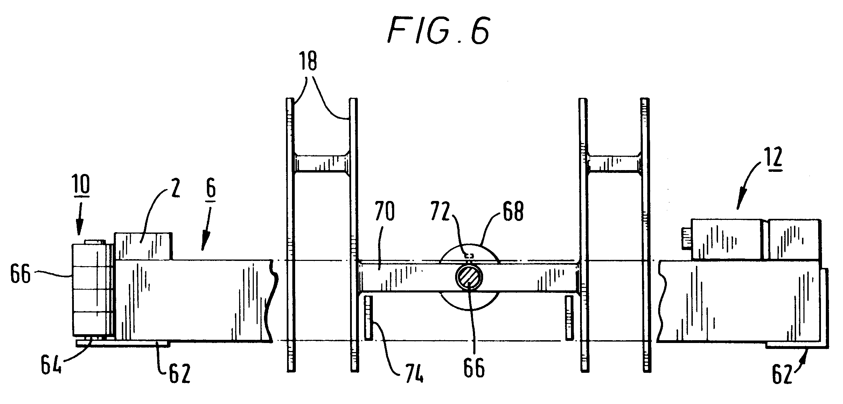

It is, of course, possible to increase the strength and rigidity of the frame by increasing the size and rigidity of the support bars 2 and of the cross-bars 4 and 6, and/or by adding strengthening members as required. In particular, additional strengthening of the gate 6 may be desirable as it is subjected to strong forces as the aircraft wheel assembly is lifted. For example, and as can be seen in Figure 6, each of the support bars 2 may be arranged to carry support members 62 which extend beneath the gate 6, in contact therewith, to provide additional support therefor. Such support members may be formed as plates or ribs, for example.

In one embodiment (not illustrated), the support members are angle pieces having one limb affixed to the support beam and a second limb extending beneath the gate 6. Preferably, the second limb of the angle piece located near to the hinge 10 is arranged to extend in a direction substantially at right angles to the longitudinal extent of the support bar 2 and also to project rearwardly of said support bar 2 substantially in the direction of its longitudinal extent. In this way, the angle piece provides support for the gate 6 in both its closed and its open position.

In the embodiment shown in Figure 6, the hinge 10 has been located on the support bar 2 rather than on the gate 6 as in the embodiment of Figure 1. In this respect, the hinge 10 of Figure 6 comprises a hinge pin 64 upstanding from a support plate 62 which extends beneath and is fixed to the gate 6. The hinge pin 64 extends within a tube 66 carried by the support bar 2. It will therefore be seen that the support plate 62 is mounted for hinged movement with the gate 6.

The embodiment of Figure 6 also shows an alternative manner in which the contour member 14 can be coupled to the gate 6 to enable limited tilting movement of the nose wheel assembly, and also to enable the pivoting of the contour member 14 upwardly to lift the nose wheel assembly.

In the embodiment of Figure 6, an arrangement akin to a universal joint is provided. In this respect, a part spherical member 68 which is open in the interior of the frame is welded to the gate 6. The contour member carries a ball 66 which is received within the member 68 and is pivotable with respect thereto whereby pivoting movement of the contour member 14 relative to the gate 6 to raise or lower the nose wheel assembly is enabled. The ball 66 is provided on the free end of a shaft (not visible) which is connected into a tube 70 extending between, and connected to, two adjacent plates 18 of the contour member 14. A bolt 72 fixes the shaft of the ball 66 to the tube 70. It will be appreciated that lateral pivoting of the ball 66 within the member 68 is also enabled whereby tilting of the wheel assembly can occur. This tilting movement is limited by stops 74 provided on the gate 6.

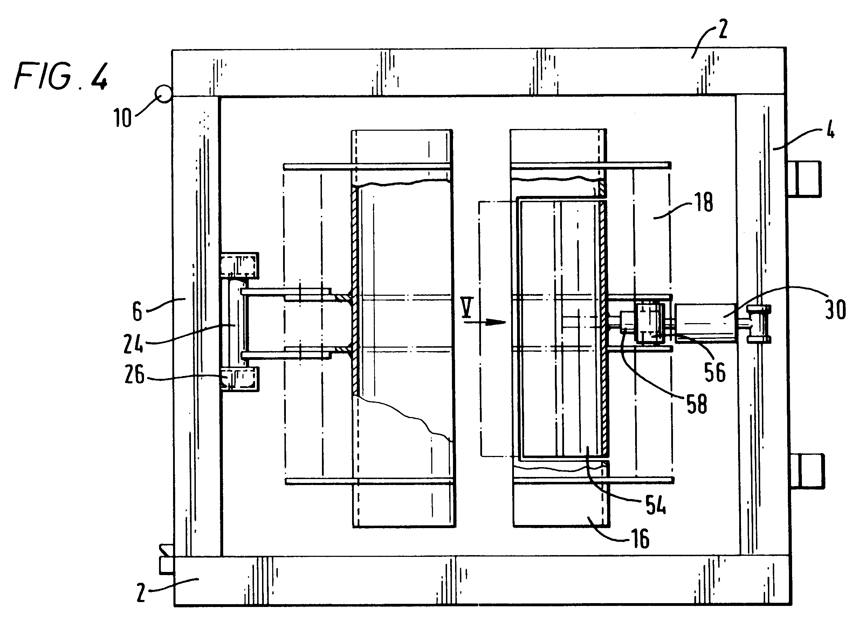

Of course, the requirement to enclose as much of the wheel as is practicable means that the apparatus as shown in Figures 1 and 2 has to be specifically designed to fit the particular sized nose wheels of a particular aircraft type. Figures 3 and 4 indicate one way of adapting the apparatus so far described to enable it to lift smaller wheels. For example, the nose wheel(s) of a Boeing 747 are each 1200mm in diameter, whilst a DC10 and an Airbus have nose wheels 980mm in diameter. The full extent of the contour members may thus be arranged to engage a 1200mm wheel, and the arrangement illustrated in Figures 3 and 4 adapted to engage a 980mm diameter wheel. In this respect, and as can be seen from Figure 3, the main contour plate 16 of a contour member 14 is provided with a rectangular aperture 52 in which a relief contour plate part 54 is mounted. The piston and cylinder unit 30 is pivotally connected to the reinforcing bar 18 of the contour member 14, and an auxiliary piston and cylinder unit 56 is supported by the reinforcing bar 18 and has a rod 58 rigidly connected to the relief part 54. It will therefore be appreciated that the main piston and cylinder unit 30 can be extended to move and pivot the whole of the contour member 14, whereas the relief piston and cylinder unit 56 can be extended to push the part 54 forwardly of the contour plate 16. In this respect, the relief part 54 is curved such that when it is received within the aperture 52 the main part 16 and the relief part 54 together define a substantially continuous curved wheel engaging surface. Extension of the piston rod 58 of the relief part moves the part 54 towards the other contour member as indicated in dash-dot lines in Figure 4. This enables a smaller wheel to be engaged between the relief part 54 and the other contour member 14.

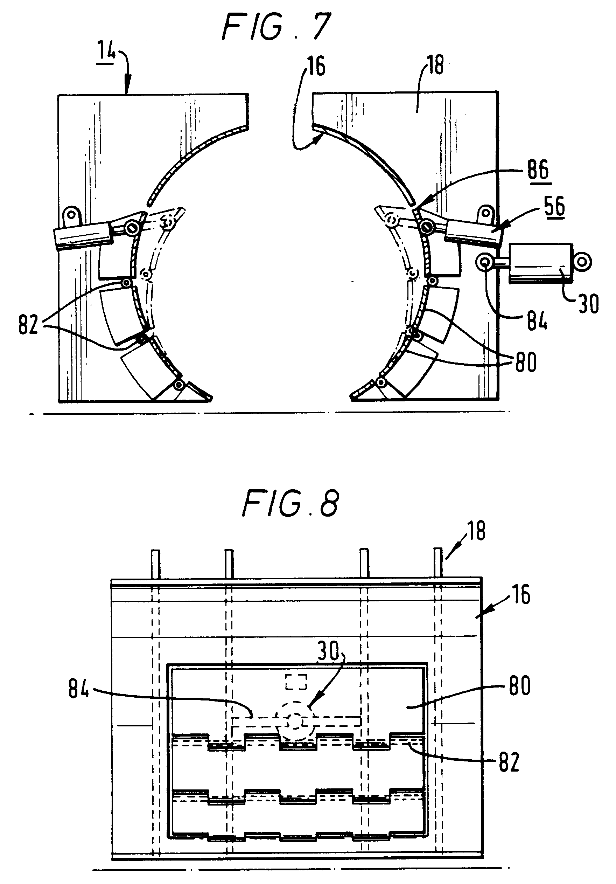

A further embodiment of the apparatus able to be adapted to the size of the nose wheel of a particular aircraft is shown in Figures 7 and 8. In this embodiment, the contour members 14 are each formed of a number of hinged segments 80 so that each contour member is able to conform more closely to the particular aircraft wheels to be enclosed. As previously, each contour member comprises a number of spaced plates 18 supporting a curved contour plate 16 having an aperture therein. However, the spaced plates 18 also support a second, lower, movable contour plate 86 which, in its outer position, is within the aperture of the contour plate 16 and forms a substantially continuous wheel engaging surface therewith. The movable contour plate 86 is formed from a number of curved segments 80, transversely extending edges of the segments 80 being hingedly connected by transverse hinges 82 to transverse edges of adjacent segments. The lowest segment 80 is connected at its ends to the contour plate 16.

A piston and cylinder unit 56 is connected between one of the plates 18 and the top segment 80 and is extensible to move the segments 80 to the inner position shown in Figure 7. The main piston and cylinder unit 30 is connected at one end to a shaft 84 extending between two adjacent plates 18. As previously, the other end of the piston and cylinder unit is connected to the cross-bar 4.

It is also possible to accommodate different sized nose wheels by attaching chocks or spacers (not shown) to the wheel engaging surfaces of the contour members 14. For example, such chocks or spacers may be attached by nuts and bolts or by any other fastening system. In this respect, the radius of curvature of the wheel engaging surfaces is generally arranged to correspond to that of the largest aircraft nose wheels likely to be encountered, whilst the chocks have an inside radius of curvature corresponding to smaller sized nose wheels. The outside radius of curvature of the chocks or spacers corresponds to the inside radius of curvature of the wheel engaging surfaces so that the chocks will be securely positioned thereto by the conforming surfaces of the respective chocks and the wheel engaging surfaces.

It will be appreciated that modifications and variations to the structure as described above may be made within the scope of the appended claims.

## Claims

1. Apparatus for moving aircraft comprising a wheeled frame (2-8), and aircraft wheel engaging means (14) carried by said frame, wherein said aircraft wheel engaging means comprises at least two contour members (14) each having a concave wheel engaging surface, each said contour member (14) being pivotable with respect to the frame (2-8), and further comprising moving means (30) for causing relative movement of said contour members (14) towards one another to cooperate to engage an aircraft wheel (50), and lifting means (24, 30) for lifting said cooperating contour members (14) relative to said frame (2-8), characterised in that together the wheel engaging surfaces of said contour members (14) extend over more than half of the circumference of a circle whereby when said cooperating contour members (14) engage on the circumferential surface of an aircraft wheel (50) more than half of said wheel circumferential surface is engaged thereby.

2. Apparatus for moving aircraft comprising a wheeled frame (2-8), and aircraft wheel engaging means (14) carried by said frame, wherein said aircraft wheel engaging means comprises at least two contour members (14) each having a concave wheel engaging surface, each said contour member (14) being pivotable with respect to the frame (2-8), and further comprising moving and lifting means (24, 30) for causing relative movement of said contour members (14) towards one another to cooperate to engage an aircraft wheel (50) and for lifting said cooperating contour members (14) relative to said frame (2-8), characterised in that together the wheel engaging surfaces of said contour members (14) extend over more than half of the circumference of a circle whereby when said cooperating contour members (14) engage on the circumferential surface of an aircraft wheel (50) more than half of said wheel circumferential surface is engaged thereby.

3. Apparatus as claimed in Claim 2, wherein the pivotable connections of said contour members (14) to the frame and said moving and lifting means (24, 30) are arranged such that action by said moving and lifting means (24, 30) initially causes the contour members (14) to move relative to one another to engage a wheel (50), and continued action subsequently lifts the contour members, and the wheel, relative to said frame (2-8).

4. Apparatus as claimed in any preceding claim, wherein together the wheel engaging surfaces of said contour members (14) extend circumferentially over more than three-quarters of the circumferential surface of an aircraft nose wheel (50).

5. Apparatus as claimed in any preceding claim, wherein only two said contour members (14) are supported on said frame (2-8), and wherein the axial extent of the wheel engaging surfaces of the two contour members is substantially the same and approximates to the axial extent of an aircraft nose wheel (50).

6. Apparatus as claimed in Claim 5, wherein the pivotable connection (24) of one said contour member (14) to the frame (2-8) is lower than the pivotable connection (36) of the other said contour member (14) relative to the frame (2-8).

7. Apparatus as claimed in any preceding claim, wherein each said contour member (14) is a substantially concave plate having an inner surface forming said wheel engaging surface which extends over substantially at least one quarter of the circumferential surface of an aircraft nose wheel (50).

8. Apparatus as claimed in Claim 7, wherein each said contour member (14) comprises a reinforcing member (18, 20) carrying said substantially concave plate, each said reinforcing member being pivotably mounted on said frame (2-8).

9. Apparatus as claimed in Claim 8, wherein one or each said reinforcing member (18, 20) is pivotably mounted on said frame (2-8) by way of extensible means, said extensible means forming said moving means or said moving and lifting means.

10. Apparatus as claimed in Claim 9, wherein only one said reinforcing member (18, 20) is connected to said frame (2-8) by way of extensible means, and wherein said extensible means comprises at least one piston and cylinder unit.

11. Apparatus as claimed in any of Claims 8 to 10, wherein at least one said reinforcing member (18, 20) is mounted on said frame to be tiltable relative thereto in a direction substantially at right angles to the direction of pivoting movement.

12. Apparatus as claimed in any of Claims 8 to 11, wherein means are provided for varying the size of said inner, wheel engaging surface of said contour plate.

13. Apparatus as claimed in Claim 12, wherein the contour plate of at least one said contour member (14) is comprised of a first main part (16) having an aperture (52) therein in which a second part (54) may be located to define with the first part the inner, wheel engaging surface, and further comprising means (56) for moving the second part out of said aperture to define a reduced wheel engaging surface.

14. Apparatus as claimed in Claim 13, further comprising a second piston and cylinder unit (56) for moving said second part (54), said piston and cylinder unit being pivotably connected to said second part and to said reinforcing member.

15. Apparatus as claimed in any preceding claim, wherein said frame (2-8) comprises two substantially parallel cross-bars (4, 6), a respective one of said contour members (14) being pivotably connected to each of said cross-bars, and two substantially parallel support bars (2) joined by said cross-bars, wherein at least one wheel (8) is supported on each said support bar, and said contour members (14) are supported within said cross-bars and said support bars.

16. Apparatus as claimed in Claim 15, wherein one end of one of said cross-bars (6) is hingedly connected to one of said support bars (2) to define a movable gate, the other end of said one cross-bar and the other support bar carrying cooperating locking means (12) to enable the gate to be locked in a closed position.

17. Apparatus as claimed in Claim 16, wherein each said contour member (14) comprises a reinforcing member (18, 20) carrying a substantially concave plate (16), and wherein the reinforcing member of one contour member is pivotably connected directly onto said gate (6), and the reinforcing member of the other contour member is connected to the other cross-bar (4) by way of at least one piston and cylinder unit (30).

18. A vehicle for moving an aircraft comprising apparatus as claimed in any preceding claim, and means for moving said vehicle along the ground.

## Patentansprüche

1. Vorrichtung zum Schleppen eines Flugzeugs, mit einem mit Rädern versehenen Rahmen (2-8) und Flugzeugrad-Einfaßmitteln (14), die durch den Rahmen getragen werden, wobei die Flugzeugrad-Einfaßmittel wenigstens zwei Konturteile (14) aufweisen, von denen jedes eine konkave Radeinfaßoberfläche aufweist, wobei jedes der Konturteile (14) in bezug auf den Rahmen (2-8) schwenkbar ist, und weiter mit Bewegungsmitteln (30), um eine relative Bewegung der Konturteile (14) aufeinander zu zu bewirken, um in Zusammenwirkung ein Flugzeugrad (50) einzuspannen, und mit Hebemitteln (24, 30) zum Anheben der zusammenwirkenden Konturteile (14) relativ zu dem Rahmen (2-8), dadurch gekennzeichnet, daß die Radeinfaßoberflächen der Konturteile (14) zusammen über mehr als den halben Umfang eines Kreises verlaufen, wodurch, wenn die zusammenwirkenden Konturteile (14) an der äußeren Umfangsfläche eines Flugzeugrads (50) anliegen, mehr als die Hälfte der Radumfangsfläche dadurch eingefaßt wird.

2. Vorrichtung zum Schleppen eines Flugzeugs, mit einem mit Rädern versehenen Rahmen (2-8) und Flugzeugrad-Einfaßmitteln (14), die durch den Rahmen getragen werden, wobei die Flugzeugrad-Einfaßmittel wenigstens zwei Konturteile (14) aufweisen, von denen jedes eine konkave Radeinfaßoberfläche aufweist, wobei jedes der Konturteile (14) in bezug auf den Rahmen (2-8) schwenkbar ist, und weiter mit Bewegungs- und Hebemitteln (24, 30), um eine relative Bewegung der Konturteile (14) aufeinander zu zu bewirken, um in Zusammenwirkung ein Flugzeugrad (50) einzuspannen, und um die zusammenwirkenden Konturteile (14) relativ zu dem Rahmen (2-8) anzuheben, dadurch gekennzeichnet, daß die Radeinfaßoberflächen der Konturteile (14) zusammen über mehr als den halben Umfang eines Kreises verlaufen, wodurch, wenn die zusammenwirkenden Konturteile (14) an der äußeren Umfangsfläche eines Flugzeugrads (50) anliegen, mehr als die Hälfte der Radumfangsfläche dadurch eingefaßt wird.

3. Vorrichtung nach Anspruch 2, wobei die schwenkbare Verbindung der Konturteile (14) an dem Rahmen und die Bewegungs- und Hebemittel (24, 30) so ausgebildet sind, daß Einwirkung durch die Bewegungs- und Hebemittel (24, 30) anfangs die Konturteile (14) dazu veranlaßt, sich relativ zueinander zu bewegen, um ein Rad (50) einzuspannen, und fortgesetzte Einwirkung anschließend die Konturteile und das Rad relativ zu dem Rahmen (2-8) anhebt.

4. Vorrichtung nach einem der vorhergehenden Ansprüche, wobei die Radeinfaßoberflächen der Konturteile (14) in Umfangsrichtung sich über mehr als dreiviertel der Umfangsfläche eines Flugzeugvorderrades (50) erstrecken.

5. Vorrichtung nach einem der vorhergehenden Ansprüche, wobei nur zwei Konturteile (14) von dem Rahmen (2-8) getragen werden und wobei die axiale Ausdehnung der Radeinfaßoberflächen der beiden Konturteile im wesentlichen gleich ist und die axiale Ausdehnung eines Flugzeugvorderrades (50) annähert.

6. Vorrichtung nach Anspruch 5, wobei die schwenkbare Verbindung (24) des einen der Konturteile (14) an dem Rahmen (2-8) relativ zu dem Rahmen (2-8) niedriger liegt als die schwenkbare Verbindung (36) des anderen der Konturteile (14).

7. Vorrichtung nach einem der vorhergehenden Ansprüche, wobei jedes der Konturteile (14) eine im wesentlichen konkave Platte mit einer Innenfläche ist, die die Radeinfaßoberfläche bildet, welche im wesentlichen über wenigstens ein Viertel der Umfangsfläche eines Flugzeugvorderrades (50) verläuft.

8. Vorrichtung nach Anspruch 7, wobei jedes der Konturteile (14) ein Verstärkungsteil (18, 20) aufweist, das die im wesentlichen konkave Platte trägt, wobei jedes der Verstärkungsteile schwenkbar an dem Rahmen (2-8) angebracht ist.

9. Vorrichtung nach Anspruch 8, wobei ein oder jedes Verstärkungsteil (18, 20) durch ausstellbare Mittel schwenkbar an dem Rahmen (2-8) angebracht ist, wobei die ausstellbaren Mittel die Bewegungsmittel oder die Bewegungs- und Hebemittel bilden.

10. Vorrichtung nach Anspruch 9, wobei nur eines der Verstärkungsteile (18, 20) an dem Rahmen (2-8) durch ausstellbare Mittel angebracht sind und wobei die ausstellbaren Mittel wenigstens eine Kolben- und Zylindereinheit aufweisen.

11. Vorrichtung nach einem der Ansprüche 8 bis 10, wobei wenigstens eines der Verstärkungsteile (18, 20) in der Weise an dem Rahmen angebracht ist, daß es dagegen in einer Richtung im wesentlichen im rechten Winkel zur Richtung der Schwenkbewegung verkippbar ist.

12. Vorrichtung nach einem der Ansprüche 8 bis 11, wobei Mittel vorgesehen sind, um die Größe der inneren, radeinfassenden Oberfläche der Konturplatten zu variieren.

13. Vorrichtung nach Anspruch 12, wobei die Konturplatte von wenigstens einem der Konturteile (14) ein erstes Hauptteil (16) mit einer Öffnung (52) darin, in der ein zweites Teil (54) angeordnet werden kann, um mit dem ersten Teil die innere, radeinfassende Oberfläche zu definieren, und weiter Mittel (56) zum Bewegen des zweiten Teils nach außen aus der Öffnung aufweist, um eine reduzierte Radeinfaßoberfläche zu definieren.

14. Vorrichtung nach Anspruch 13, die weiter eine zweite Kolben- und Zylindereinheit (56) zum Bewegen des zweiten Teils (54) aufweist, wobei die Kolben- und Zylindereinheit schwenkbar mit dem zweiten Teil und dem Verstärkungsteil verbunden ist.

15. Vorrichtung nach einem der vorhergehenden Ansprüche, wobei der Rahmen (2-8) zwei im wesentlichen parallele Querstangen (4, 6), wobei jeweils eines der Konturteile (14) schwenkbar mit einer der Querstangen verbunden ist, und zwei im wesentlichen parallele Trägerstangen (2) aufweist, die mit den Querstangen verbunden sind, wobei wenigstens ein Rad (8) an jeder Trägerstange gelagert ist und wobei die Konturteile (14) innerhalb der Trägerstangen und Querstangen gehalten sind.

16. Vorrichtung nach Anspruch 15, wobei ein Ende einer der Querstangen (6) scharnierartig mit einer der Trägerstangen (2) verbunden ist, um ein bewegliches Tor zu definieren, wobei das andere Ende dieser Querstange und die andere Trägerstange zusammenwirkende Verschlußmittel (12) tragen, um zu ermöglichen, daß das Tor in geschlossener Position verschlossen wird.

17. Vorrichtung nach Anspruch 16, wobei jedes der Konturteile (14) ein Verstärkungsteil (18, 20) aufweist, das eine im wesentlichen konkave Platte (16) trägt, und wobei das Verstärkungsteil eines Konturteils schwenkbar direkt mit dem Tor (6) verbunden ist und das Verstärkungsteil des anderen Konturteils durch wenigstens eine Kolben- und Zylindereinheit (30) mit der anderen Querstange (4) verbunden ist.

18. Schleppfahrzeug für ein Flugzeug, welches Schleppfahrzeug eine Vorrichtung nach einem der vorhergehenden Ansprüche und Mittel zum Bewegen des Fahrzeugs entlang des Bodens aufweist.

## Revendications

1. Dispositif pour le déplacement d'avions, comprenant un châssis sur roues (2-8) et un moyen (14) monté sur ledit châssis et destiné à saisir une roue d'avion, dans lequel ledit moyen destiné à saisir une roue d'avion comprend au moins deux organes profilés (14) présentant chacun une surface concave de contact avec la roue, chacun desdits organes profilés (14) pouvant pivoter par rapport au châssis (2-8), le dispositif comprenant en outre un moyen de déplacement (30) pour causer un mouvement relatif desdits organes profilés (14) l'un vers l'autre afin qu'ils coopérent pour saisir une roue (50) d'avion, et un moyen de levage (24,30) pour soulever lesdits organes profilés coopérants (14) par rapport audit châssis (2-8), caractérisé en ce que les surfaces de contact avec la roue desdits organes profilés (14) s'étendent ensemble sur plus de la moitié de la circonférence d'un cercle, de sorte que quand lesdits organes profilés coopérants (14) sont appliqués sur la surface circonférentielle de la roue (50) d'avion, plus de la moitié de ladite surface circonférentielle de la roue soit saisie par eux.

2. Dispositif pour le déplacement d'avions, comprenant un châssis sur roues (2-8) et un moyen (14) monté sur ledit châssis et destiné à saisir une roue d'avion, dans lequel ledit moyen destiné à saisir une roue d'avion comprend au moins deux organes profilés (14) présentant chacun une surface concave de contact avec la roue, chacun desdits organes profilés (14) pouvant pivoter par rapport au châssis (2-8), le dispositif comprenant en outre des moyens de déplacement et de levage (24,30) pour causer un mouvement relatif desdits organes profilés (14) l'un vers l'autre afin qu'ils coopérent pour saisir une roue (50) d'avion, et pour soulever lesdits organes profilés coopérants (14) par rapport audit châssis (2-8), caractérisé en ce que les surfaces de contact avec la roue desdits organes profilés (14) s'étendent ensemble sur plus de la moitié de la circonférence d'un cercle, de sorte que quand lesdits organes profilés coopérants (14) sont appliqués sur la surface circonférentielle de la roue (50) d'avion, plus de la moitié de ladite surface circonférentielle de la roue soit saisie par eux.

3. Dispositif selon la revendication 2, dans lequel les connexions desdits organes profilés (14) pouvant pivoter par rapport au châssis et auxdits moyens de déplacement et de levage (24,30) sont agencées de telle manière que l'action desdits moyens de déplacement et de levage (24,30) amène initialement les organes profilés (14) à se déplacer l'un par rapport à l'autre pour saisir une roue (50) et que la poursuite de cette action soulève ensuite les organes profilés et la roue par rapport audit châssis (2-8).

4. Dispositif selon l'une quelconque des revendications 1 à 3, dans lequel les surfaces de contact avec la roue desdits organes profilés (14) s'étendent ensemble, dans la direction circonférentielle, sur plus des trois quarts de la surface circonférentielle de la roue d'atterrissage avant (50) d'un avion.

5. Dispositif selon l'une quelconque des revendications 1 à 4, dans lequel il n'est monté que deux desdits organes profilés (14) sur ledit châssis (2-8), et dans lequel l'étendue axiale des surfaces de contact avec la roue des deux organes profilés est sensiblement la même et correspond approximativement à l'étendue axiale de la roue d'atterrissage avant (50) d'un avion.

6. Dispositif selon la revendication 5, dans lequel la connexion (24) de l'un desdits organes profilés (14) pouvant pivoter par rapport au châssis (2-8) est plus basse que la connexion (36) de l'autre desdits organes profilés (14) pouvant pivoter par rapport au châssis (2-8).

7. Dispositif selon l'une quelconque des revendications 1 à 6, dans lequel chacun desdits organes profilés (14) est une plaque essentiellement concave dont la surface interne, formant ladite surface de contact avec la roue, s'étend sur pratiquement au moins un quart de la surface circonférentielle de la roue d'atterrissage avant (50) d'un avion.

8. Dispositif selon la revendication 7, dans lequel chacun desdits organes profilés (14) comprend un organe de renforcement (18,20) portant ladite plaque essentiellement concave, chacun desdits organes de renforcement étant monté pivotant sur ledit châssis (2-8).

9. Dispositif selon la revendication 8, dans lequel l'un ou chacun desdits organes de renforcement (18,20) est monté pivotant sur ledit châssis (2-8) par l'intermédiaire d'un moyen extensible, ledit moyen extensible constituant ledit moyen de déplacement ou lesdits moyens de déplacement et de levage.

10. Dispositif selon la revendication 9, dans lequel un seul desdits organes de renforcement (18,20) est relié audit châssis (2-8) par l'intermédiaire d'un moyen extensible, et dans lequel ledit moyen extensible comprend au moins un ensemble piston-cylindre.

11. Dispositif selon l'une quelconque des revendications 8 à 10, dans lequel l'un au moins desdits organes de renforcement (18,20) est monté sur ledit châssis de manière à pouvoir s'incliner par rapport à celui-ci dans une direction sensiblement perpendiculaire à la direction du mouvement pivotant.

12. Dispositif selon l'une quelconque des revendications 8 à 11, dans lequel des moyens sont prévus pour faire varier la grandeur de ladite surface interne de contact avec la roue de ladite plaque profilée.

13. Dispositif selon la revendication 12, dans lequel la plaque profilée de l'un au moins desdits organes profilés (14) se compose d'une première partie principale (16) qui comporte une ouverture (52) dans laquelle une seconde partie (54) peut être placée pour définir, avec la première partie, la surface interne de contact avec la roue, un moyen (56) étant en outre prévu pour écarter la seconde partie de ladite ouverture afin de définir une surface réduite de contact avec la roue.

14. Dispositif selon la revendication 13, comprenant en outre un second ensemble piston-cylindre (56) pour déplacer ladite seconde partie (54), ledit ensemble piston-cylindre étant relié à pivotement à ladite seconde partie et audit organe de renforcement.

15. Dispositif selon l'une quelconque des revendications 1 à 14, dans lequel ledit châssis (2-8) comprend deux traverses (4,6) sensiblement parallèles à chacune desquelles l'un desdits organes profilés (14) est relié à pivotement, et deux barres de support (2) sensiblement parallèles, jointes par lesdites traverses, une roue (8) au moins étant montée sur chacune desdites barres de support, et lesdits organes profilés (14) étant montés en dedans desdites traverses et desdites barres de support.

16. Dispositif selon la revendication 15, dans lequel une extrémité de l'une des traverses (6) est raccordée par articulation à l'une desdites barres de support (2) pour définir une barrière mobile, l'autre extrémité de ladite traverse et l'autre barre de support portant des moyens de verrouillage coopérants (12) afin que ladite barrière puisse être verrouillée en position fermée.

17. Dispositif selon la revendication 16, dans lequel chacun desdits organes profilés (14) comprend un organe de renforcement (18,20) portant une plaque essentiellement concave (16), l'organe de renforcement d'un organe profilé est relié directement à pivotement à ladite barrière (6) et l'organe de renforcement de l'autre organe profilé est relié à l'autre traverse (4) par l'intermédiaire d'au moins un ensemble piston-cylindre (30).

18. Véhicule pour déplacer un avion, comprenant un dispositif selon l'une quelconque des revendications 1 à 17 et des moyens pour déplacer ledit véhicule sur le sol.
